# EUROPEAN PATENT APPLICATION

(11) **EP 0 969 631 A2**
(43) Date of publication of application: **05.01.2000**
(21) Application number: 99112717.6
(22) Date of filing: 01.07.1999
(51) Int. Cl.: H04L 12/56, H04Q 11/04

(54) **Packet switch system with simplified bus control**

(30) Priority: 01.07.1998 JP 18577998
(71) Applicant: NEC CORPORATION, Tokyo (JP)
(72) Inventor: Harasawa, Akio, Minato-ku, Tokyo (JP); Kaganoi, Teruo, Minato-ku, Tokyo (JP)
(74) Representative: Glawe, Delfs, Moll & Partner

(57) **Abstract**

A packet switch system can speed up operation rate and simplify bus control. The packet switch system has a plurality of add drop modules performing transmission and reception of packet data, a control bus for connecting the add drop modules and control circuit for controlling these add drop modules, packet data bus provided separately from the control bus, to which the plurality of add drop modules are connected, for transmitting packet data transmitted and received in the add drop modules, and a memory temporarily storing the packet data to be transmitted and received via the packet data bus. The plurality of add drop modules performs transmission and reception of packet data via the packet data bus and the memory.

## Description

### BACKGROUND OF THE INVENTION

### Field of the Invention

The present invention relates generally to a packet switch system, an integrated circuit including the same, a packet switch control method and a packet switch control program storage medium. More particularly, the invention relates to an internal bus structure and bus control for realizing a packet switch system typically represented by a router.

### Description of the Related Art

Conventionally, there are a case where a path to pass packet data per se which is to be switched and a path for information for a control system necessary for implementing switching (routing) are realized by a common bus, and a case to realize the paths otherwise. Namely, in a system which has relatively low performance demand value, a common bus can be commonly used for these two paths, and in a system which has relatively high performance demand value, mutually independent dedicated buses are provided, respectively, so that traffics for these two applications may not cause adverse effect to each other.

More particularly, there is a general bus employing a ternary logic element (three-state buffer), as a control bus, which general bus will be hereinafter referred to as ternary logic bus. On the other hand, as a packet data bus, there are examples, such as the general bus employing the ternary logic element or a cross-point type switch.

The conventional bus dedicated for packet data set forth above encounters the following drawback. In the former example, the ternary logic bus has low extreme in speeding up or is complicate in control to make procedure for bus control or overhead portion of the control portion is large.

The later example encounters drawbacks in that a circuit size required for forming the cross-point type switch becomes large or significant difficulty is caused in realizing a function required for the control portion of the cross-point type switch or for satisfying precision in control.

In this circumstance, it is an important factor as a term for "good switch" to be a switch system which can be arbitrarily adjust a size of the circuit to be large and small, and a performance to be high and low (so-called "scalable switch system") with arranging and connecting one or the least kinds of basic parts, without touching bottleneck in viewpoint of performance or cost.

Upon realizing a variable length packet switch employing a common buffer type switch structure, management of non-used region on the common memory or management of the stored packet have been realized by software, in general. Because of software process, performance of the function per se cannot be made higher to cause adverse effect for other process on the processor.

There have been known a switching node located at a junction between an Asynchronous Transfer Mode (ATM) network and an Internet Protocol (IP) network and interworking between both networks, a switching node connectionless switching under an IP network type rule in a switching decision while located in the ATM network, and so forth. There is high demand for data structure in a memory or a memory control system adapted for the switching node of this kind.

### SUMMARY OF THE INVENTION

The present invention has been worked out for solving drawbacks in the prior art as set forth above. Therefore, it is an object of the present invention to provide a packet switch which is simple in controlling a bus, an integrated circuit including the same, a packet switch control method and a packet switch control program storage medium.

According to one aspect of the present invention, a packet switch system comprises:
a plurality of add drop modules performing transmission and reception of packet data;
a control bus for connecting the add drop modules and control circuit for controlling these add drop modules;
packet data bus provided separately from the control bus, to which the plurality of add drop modules are connected, for transmitting packet data transmitted and received in the add drop modules; and
a memory temporarily storing the packet data to be transmitted and received via the packet data bus,
the plurality of add drop modules performing transmission and reception of packet data via the packet data bus and the memory.

According to the second aspect of the present invention, an integrated circuit integrating on a single chip a packet switch system comprises:
a plurality of add drop modules performing transmission and reception of packet data;
a control bus for connecting the add drop modules and control circuit for controlling these add drop modules;
packet data bus provided separately from the control bus, to which the plurality of add drop modules are connected, for transmitting packet data transmitted and received in the add drop modules; and
a memory temporarily storing the packet data to be transmitted and received via the packet data bus,
the plurality of add drop modules performing transmission and reception of packet data via the packet data bus and the memory.

According to the third aspect of the present invention, an integrated circuit integrating on a single chip a packet switch system comprises:
a plurality of add drop modules performing transmission and reception of packet data;
a control bus for connecting the add drop modules and control circuit for controlling these add drop modules;
packet data bus provided separately from the control bus, to which the plurality of add drop modules are connected, for transmitting packet data transmitted and received in the add drop modules; and
a memory temporarily storing the packet data to be transmitted and received via the packet data bus,
the plurality of add drop modules performing transmission and reception of packet data via the packet data bus and the memory,
the packet data bus included in the system is connected to the packet data bus included in other packet switch system for transmitting and receiving the packet data with other packet switch system via the packet data bus connected thereto.

According to the fourth aspect of the present invention, a packet switch control method in a packet switch system including a plurality of add drop modules performing transmission and reception of packet data, a control bus for connecting the add drop modules and control circuit for controlling these add drop modules, packet data bus provided separately from the control bus, to which the plurality of add drop modules are connected, for transmitting packet data transmitted and received in the add drop modules, and a memory temporarily storing the packet data to be transmitted and received via the packet data bus, the plurality of add drop modules performing transmission and reception of packet data via the packet data bus and the memory, comprises:
region obtaining step of obtaining a region for storing the packet data to be transmitted and received in the memory;
storing step of storing the packet data in the obtained region; and
outputting step of outputting the stored packet data.

According to the fifth aspect of the present invention, a storage medium storing a packet switch control program in a packet switch system including a plurality of add drop modules performing transmission and reception of packet data, a control bus for connecting the add drop modules and control circuit for controlling these add drop modules, packet data bus provided separately from the control bus, to which the plurality of add drop modules are connected, for transmitting packet data transmitted and received in the add drop modules, and a memory temporarily storing the packet data to be transmitted and received via the packet data bus, the plurality of add drop modules performing transmission and reception of packet data via the packet data bus and the memory, the packet switch control program executes:
region obtaining step of obtaining a region for storing the packet data to be transmitted and received in the memory;
storing step of storing the packet data in the obtained region; and
outputting step of outputting the stored packet data.

In the preferred construction, the memory may have a plurality of fixed length cells and the packet data is dividingly stored in a plurality of cells. The memory may be connected to the packet data bus via one of the plurality of add drop modules. A plurality of cells may have a linked list structure and the packet data dividingly stored in the plurality of cells may be concatenated by the linked list structure, and vacant cells among the plurality of cells, which store no effective data, may be concatenated by the linked list structure.

The feature of the packet switch system according to the present invention is as follow. Separately from the bus for control, an ultra high speed bus of ring structure is provided as an internal bus dedicated for packet data. A port interface portion has a structure for transferring a packet data with a ring bus via an add drop module (ADM). On the other hand, it is also the feature of the system to put a common packet memory as one of member of the ring bus.

Furthermore, as the internal data structure of the common packet memory, a memory region of a fixed length called cell is taken as a minimum unit for storing the packet data, and the packet is expressed by concatenating a pointer designating the cell and a cell pointer structure consisted of the pointer designating the pointer structure designating the cell by a linked list structure. On the other hand, the cell pointer corresponding not used cell forms a vacant cell queue. On the other hand, management of the vacant packet queue and the packet is performed by the pointer designating the foregoing packet and the packet pointer structure consisted of the pointer designating the pointer structure of the same kind as the own one. The memory management/pointer management is autonomously performed by hardware. And, the packet queuing of the upper level (e.g. per port/per preferential class or so forth) is performed by software process by central processing unit (CPU).

It is also feature of the present invention that a port for linking and expanding the size and performance by mutually linking the unit switches even when the unit switch has relatively small size and relatively low performance.

In short, according to the present invention, there is provided an architecture adapted for constructing a packet switch system (router), in which CPU, port interface, packet memory control interface and so forth are integrated on the single chip.

### BRIEF DESCRIPTION OF THE DRAWINGS

The present invention will be understood more fully from the detailed description given herebelow and from the accompanying drawings of the preferred embodiment of the present invention, which, however, should not be taken to be limitative to the invention, but are for explanation and understanding only.

In the drawings:
Fig. 1 is a block diagram showing a construction of one embodiment of a packet switch system according to the present invention;
Figs. 2 to 13 are diagrammatic illustrations showing operations of one embodiment of the packet switch system of Fig. 1;
Fig. 14 is an illustration showing a relationship between a packet and a minimum storage unit of a common packet storing memory portion;
Fig. 15 is an illustration showing an example of internal construction of respective ADMs;
Fig. 16 is an illustration showing example of particular structure of a packet storing memory portion;
Figs. 17 to 19 are illustration showing operation of the packet storing memory portion of Fig. 16;
Fig. 20 is an illustration showing one embodiment of an integrated circuit employing the packet switch system of Fig. 1;
Fig. 21 is an illustration showing another embodiment of the integrated circuit employing the packet switch system of Fig. 1; and
Fig. 22 is an illustration showing a particular hardware construction for realizing arbitration.

### DESCRIPTION OF THE PREFERRED EMBODIMENT

The present invention will be discussed hereinafter in detail in terms of the preferred embodiment of the present invention with reference to the accompanying drawings. In the following description, numerous specific details are set forth in order to provide a thorough understanding of the present invention. It will be obvious, however, to those skilled in the art that the present invention may be practiced without these specific details. In other instance, well-known structures are not shown in detail in order to avoid unnecessarily obscure the present invention. In respective drawings to which the following description makes reference, like parts to those shown in other drawing will be identified by like reference numerals throughout the disclosure.

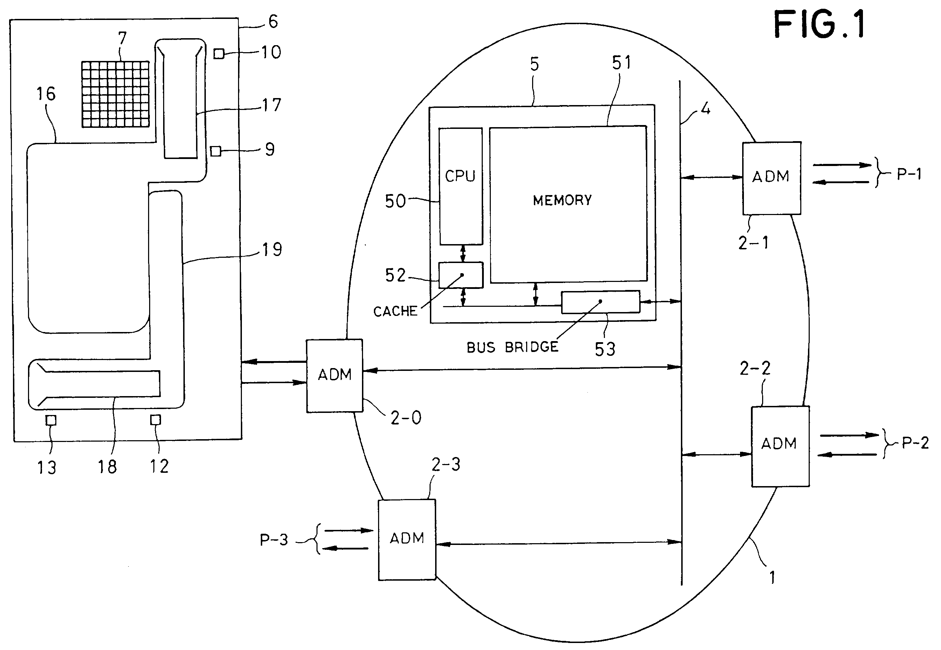

Fig. 1 is a block diagram showing one embodiment of a packet switch system according to the present invention. The shown embodiment of the packet switch system includes Add Drop Modules (hereinafter referred to as ADM) 2-1 to 2-N (N = 3 in the shown embodiment) corresponding to port interfaces of arbitrary number of ports P-1 to P-N (N = 3 in the shown embodiment). The ADMs 2-1 to 2-N and ADM 2-0 corresponding to a packet storing memory portion 6 are arranged on a ring bus with a pipeline form connection. In conjunction therewith, the ADMs 2-0 to 2-3 are also connected to a central control portion 5 via control buses 4 to be controlled by the central control portion 5.

Here, the central control portion 5 is constructed with a central processing unit (CPU) 50, a memory 51, a cache memory (Cache) 52 and a bus bridge 53. The central control portion 5 can realize a control function which will be discussed later, by data structure defined using a software manner and a process algorithm.

On the other hand, the packet storing memory portion 6 is connected to the ADM 2-0. In a common packet storing memory portion 7 within the packet storing memory portion 6, a fixed length (for example, 64 bytes) is handled as a minimum unit (cell). The packet storing memory portion 6 includes a vacant packet queue 18 indicating packets which can be stored in the common packet storing memory portion 7 and a vacant cell queue 17 indicating cell in vacant condition in the common packet storing memory portion 7. It should be noted that a packet pointer structure belongs in the vacant packet queue 18 and a cell pointer structure which will be discussed later, belongs in the vacant cell queue 17.

A leading end position of the vacant packet queue 18 is designed by a queue leading end pointer 12 and a trailing end position thereof is designed by a queue trailing end pointer 13. The vacant packet queue 18 has a linked list data structure starting from the packet pointer structure designated by the queue leading end pointer 12 and ending at the packet pointer structure designated by the queue trail end pointer 13.

Among the packet pointer structure, one corresponding to the packet actually stored is assumed to be present within a logic region 19 within the drawing. Then, it is also assumed that a logic packet 16 designating each entry in the memory portion 7 forming the stored packet data, is present corresponding to the logic region 19. Namely, the packet pointer structure 191 present within the logic region 19 designates a cell pointer structure group within the logic packet 16. Each cell pointer structure forming the cell pointer structure group 161 designates the corresponding entry of the memory portion 7.

On the other hand, a leading end position of the vacant cell queue 17 is designated by a vacant cell queue leading end pointer 9, and a trailing end position thereof is designated by a vacant cell queue trailing end pointer 10. The vacant cell queue 17 is formed into a linked list data structure starting from a cell pointer structure designated by the cell queue leading end pointer 9 and ending at a cell pointer structure designated by the vacant cell queue trailing end pointer 10.

It should be noted that respective pointers 9, 10, 12 and 13 are formed using registers.

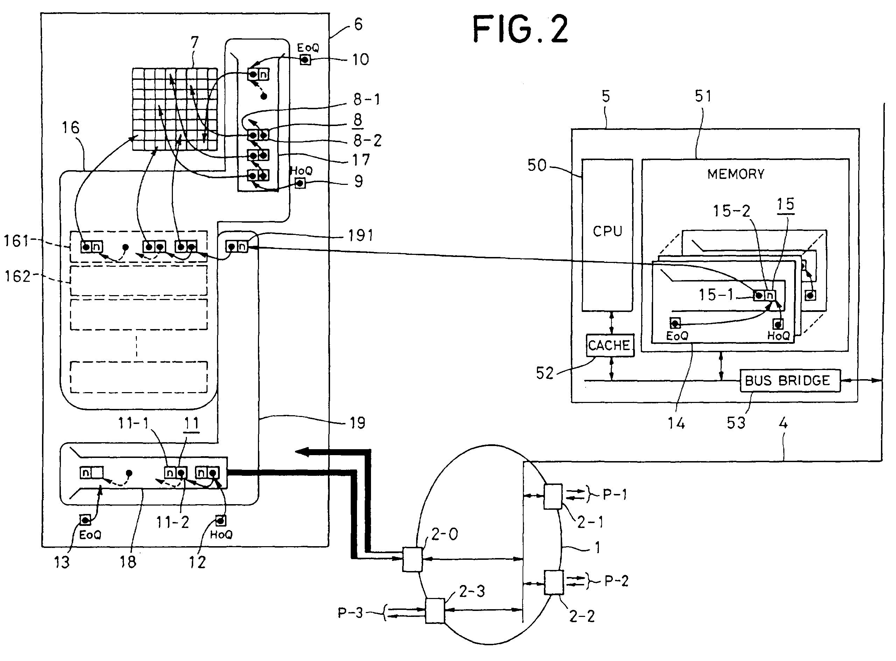

Further discussion will be given with additionally making reference to Fig. 2. As set forth above, in the common packet storing memory portion 7 in the packet storing memory portion 6, a cell of a fixed length is taken as a storage unit. Then, cell pointer structures 8 of a number corresponding to number of the cells are defined. Each cell pointer structure 8 includes at least a pointer 8-1 designating the cell and a pointer 8-2 designating other cell pointer structure of the same kind as own cell pointer structure. By the pointer 8-1 designating the cell, all cells and all cell pointer structures are linked in one-to-one correspondence.

On the other hand, there is the linked list data structure starting from the cell pointer structure designated by the vacant cell queue leading end pointer 9 and ending at the cell pointer structure designated by the vacant cell trailing end pointer 10. Namely, the cell designated by the cell pointer structure belonging in the vacant cell queue 17 is in not used condition. The necessary number of the cell pointer structures are taken from the leading end of the vacant cell queue in sequential order for establishing the linked list data structure independent of the vacant cell queue to store the packet data in respective cells with dividing per size which can be stored in each individual cell. Thus, the packet can be stored in the memory portion 7.

The data structures called as packet pointer structures 11 in number corresponding to the maximum number of the packets to be handled in this system are provided. The packet pointer structure includes at least the packet leading cell pointer 11-1 as the pointer designating the cell pointer structure corresponding to the leading end of the packet stored in the memory portion 7 and a pointer 11-2 designating the packet pointer structure of the same type as the own packet pointer structure.

Then, similarly to the vacant cell queue, the vacant packet queue 18, in which a plurality of packet pointer structures are linked with the linked list structure with defining the leading end and the trailing end by the queue leading end pointer 12 and the queue trailing end pointer 13. When the packet pointer structure belongs in this vacant packet queue 18, the packet pointer among the element of the packet pointer structure designates nothing (Null; labeled as "n" in the drawing). When the packet pointer structure is taken from the vacant packet queue, the packet pointer designates the cell pointer at the leading end of the particular packet.

On the other hand, within the center control portion 5, arbitrary number of logical packet queue 14 (for example, as defined by the software). The inside of the center control portion 5 is in the linked list structure by linking the packet queue pointer structures 15. The packet queue pointer structure 15 is consisted of at least a pointer 15-1 designating the packet pointer structure 11 and a pointer 15-2 designating the packet queue pointer of the same type as that of the own packet queue pointer.

Example of the basic operation of the shown system constructed as set forth above will be discussed with reference to Figs. 2 to 13 in sequential order.

At first, in Fig. 2, the logic pointer 16 designated from the packet queue pointer structure 15 in the logic packet queue 14 present in a process realized in software by the central control portion 5, is present in the packet storing memory portion 6. In practice, the packet queue pointer structure 15 designates the packet pointer structure 191 which, in turn, designates a cell pointer structure group 161. Then, each cell pointer structure forming the cell pointer structure group 161 designates respectively corresponding substances of the packet, namely, entries corresponding to the memory portion 7.

It should be noted that the logic packet queue 14 is assumed to be present corresponding to respective of ADMs 2-1 to 2-3 on a ring bus 1. Namely, three logic packet queues 14 are present. The ADM corresponding to each logic packet queue manages the packet fed from own port in transmission demanding waiting condition. Furthermore, for transmission demand, two levels of preferential orders are provided, and respective logic packet queues may be prepared in accordance with preferential order. In this case, two levels of logic packet queues 14 are prepared respectively corresponding to three ADMs 2-1 to 2-3. Therefore, number of the logic packet queues becomes six.

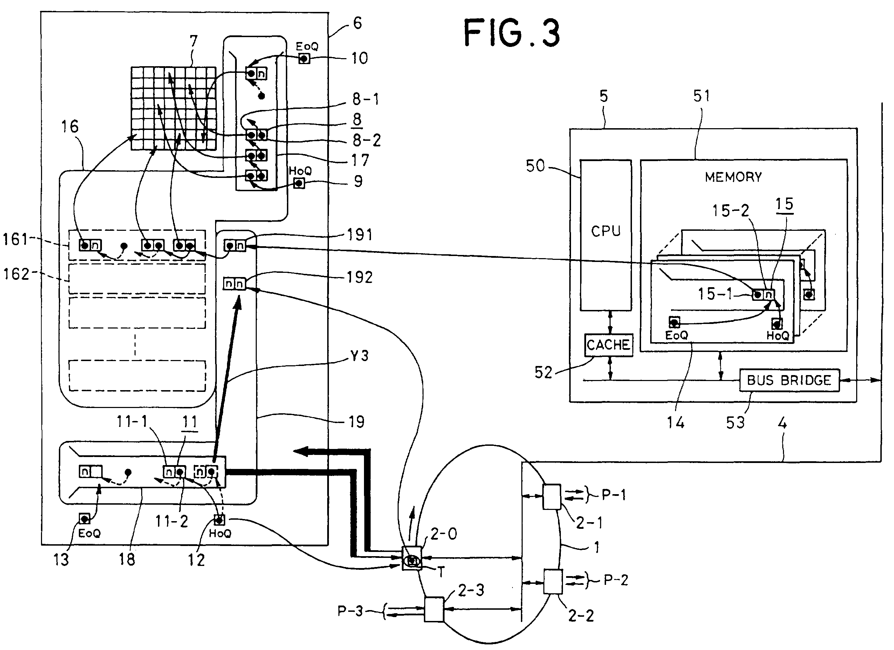

Next, in Fig. 3, the content of the queue leading end pointer 12 of the vacant packet queue 18 is copied as the packet pointer as a part of token T to transmit to the ring bus 1 from ADM 2-0. At the same time, to the vacant packet queue leading end pointer 12, a value of the pointer designating the packet pointer structure next to the pointer designated by the packet pointer structure located at the leading end of the vacant packet queue 18, is copied. This means that the packet pointer structure located at the leading end of the vacant packet queue 18 becomes not belonging to the vacant packet queue 18 and becomes an individual independent packet pointer structure 192 (arrow Y3) designated from the packet pointer in the token T to be placed in the waiting condition for receiving the packet.

Namely, in this condition, the packet pointer structure 192 in waiting condition does not designate any cell pointer structure, and thus the content thereof is "Null". Accordingly, corresponding cell pointer structure group 162 is not present. Namely, the token is transmitted to the ring bus 1 to circulate across respective ADMs to receive the transmission demand of the packet by respective ADMs.

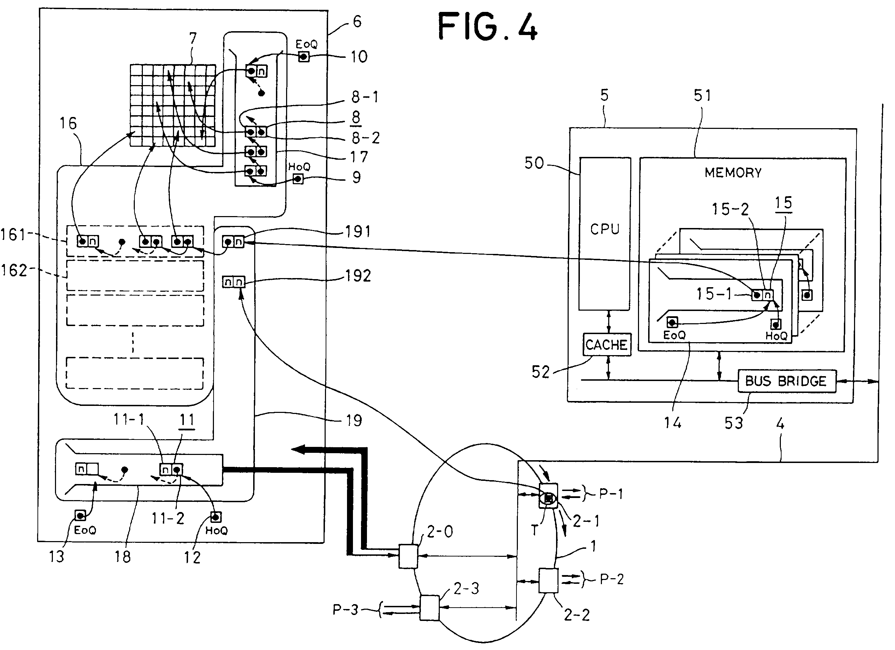

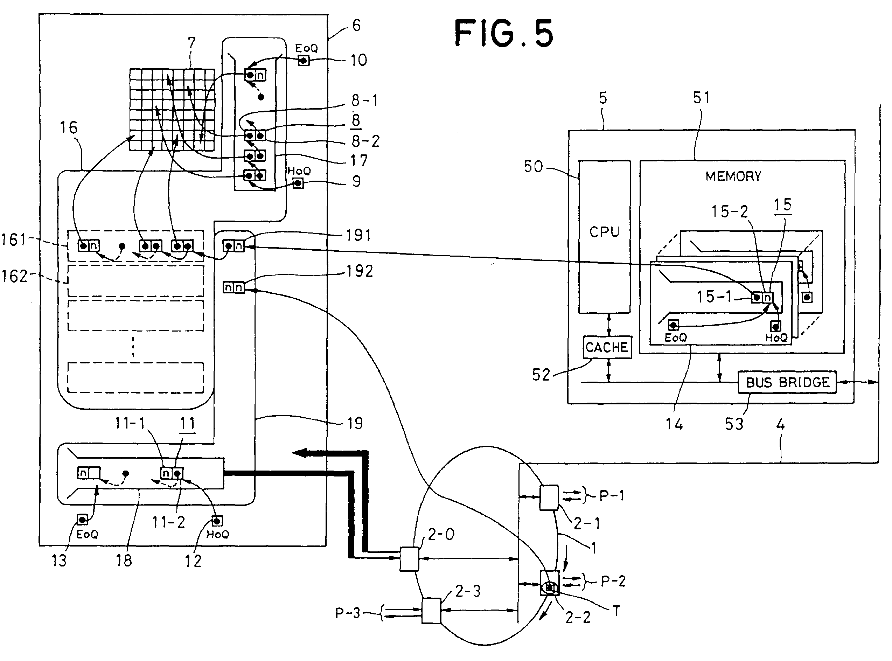

Fig. 4 shows a condition where the token T including the packet pointer passes through ADM 2-1 corresponding to a first port P-1 having no packet arrived. Similarly, Fig. 5 shows a condition where the token T including the packet pointer passes through ADM 2-2 corresponding to a second port P-2 having no packet arrived. In either case, the packet pointer in the token maintains designation of the packet pointer structure 192.

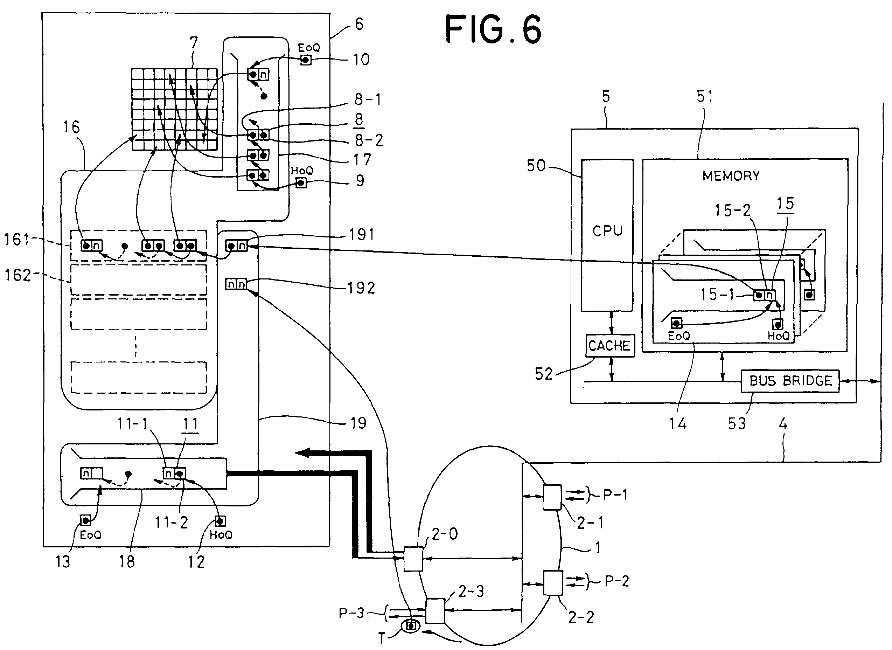

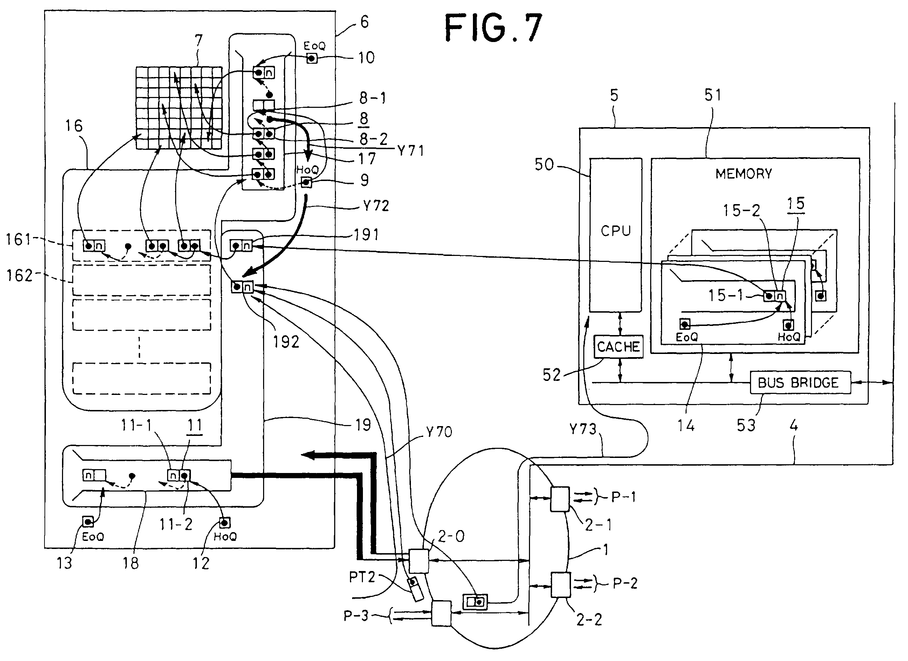

In Fig. 6, the token T is obtained by ADM 2-3 corresponding to a third port P-3 holding the packet arrived. Subsequently, in the condition shown in Fig. 7, the following operation (1) and operation (2) are performed in parallel.
(1) A packet PT2 arriving at the third port P-3 is put on the ring bus from ADM 2-3 together with the packet pointer obtained from the token T and dropped at ADM 2-0 (arrow Y70). When the packet arrives at ADM 2-0, the value of the vacant cell queue leading end pointer 9 is copied to the packet leading end cell pointer of the packet pointer structure 192 in waiting condition for storing the packet.
   Then, the cell pointer structures in number corresponding to the size required for storing all of the packets arrived are taken out from the vacant cell queue 18 (arrow 72) following the cell pointer structure at the leading end of the vacant cell queue. In this case, one cell pointer structure is taken out. If one cell pointer structure is not sufficient for storing the packet arrived, another cell pointer structure is taken out. That is, in order to store the packet arrived, the cell pointer structures are taken out from the vacant cell queue 18 one by one in sequential order. Therefore, in the condition where all of the cell pointers in number corresponding to the size required for storing overall packet arrived, the value of the pointer of the cell pointer structure next to that pointing the cell pointer structure at the trailing end of the series of cell pointer structures taken out from the vacant cell queue, is copied as new value of the vacant cell queue leading end pointer 9 (arrow Y71).
(2) In response to transfer of the packet arrived at the third port P-3 to the packet storing memory, ADM 2-3 feeds a process request to the central control portion 5 (arrow Y73). This process request is performed by interruption, for example.

In order to trigger the request and to obtain information of the packet arrived at the third port P-3, the central control portion 5 performs read access to ADM 2-3 via a control bus 4. By this read access, the pointer to the packet held on the common packet storing memory, a field (typically packet header) required among the content of the packet, size of the packet or so forth are read out.

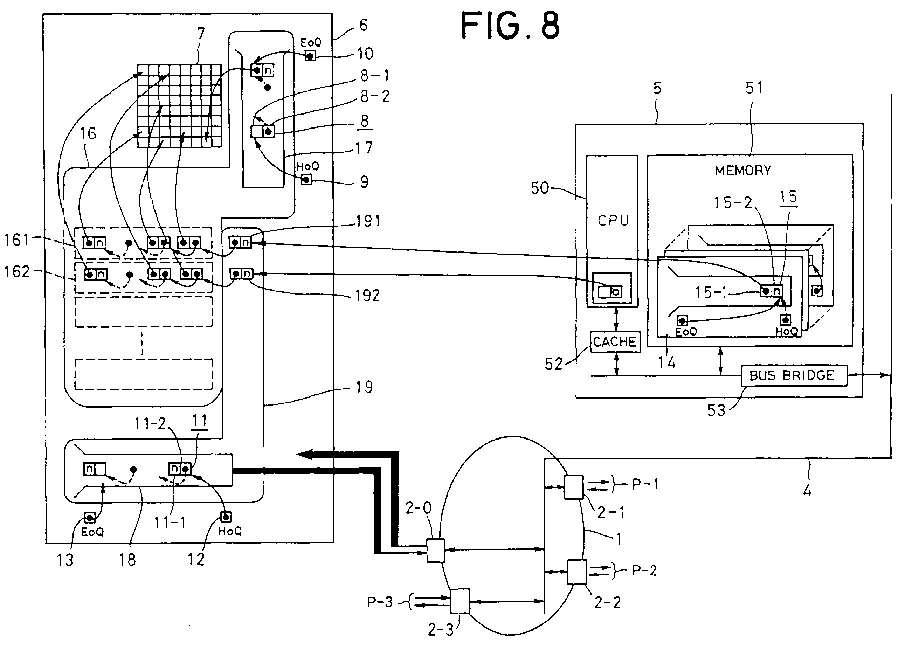

Referring to Fig. 8, the packet holds the packet pointer structure 192 and the cell pointer structure group 162 designated by the packet pointer structure 192 in the common packet storing memory portion 7 of the packet storing memory 6. On the other hand, identification of the packet and process for routing are performed by the central control portion 5. Namely, information field, such as "sourse address" and "destination address" and so forth contained in the header portion of the packet are extracted to make judgment and decision how to process the packet and where to transfer. Thus, identification of the packet is performed.

Furthermore, the identified packet is processed according to the algorithm preliminarily defined by a program. In practice, re-writing of data content of the packet, transfer to the predetermined recipient port with reference to a definition table and so forth, namely routing process, is performed.

In the central control portion 5, these packet identification and routing process are performed by software and firmware.

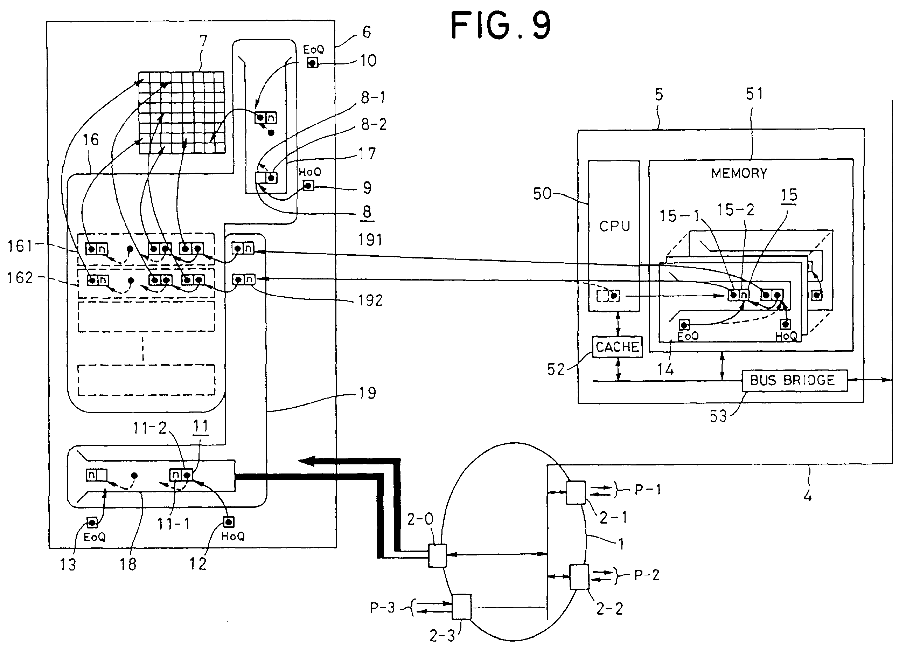

Referring to Fig. 9, decision for routing for the packet is made by the central control portion 5. As illustrated from the broken line portion to the solid line portion, the packet queue pointer structure 15 is added to the logic packet queue 14 present in the central control portion 5. Namely, the packet queue pointer structure 15 in the logic packet queue 14 designates one of the packet pointer structure 191 which, in turn, designates the cell pointer structure group 161. The other of the packet queue pointer structure 15 designates the packet pointer structure 192 which, in turn, designates the cell pointer structure group 162.

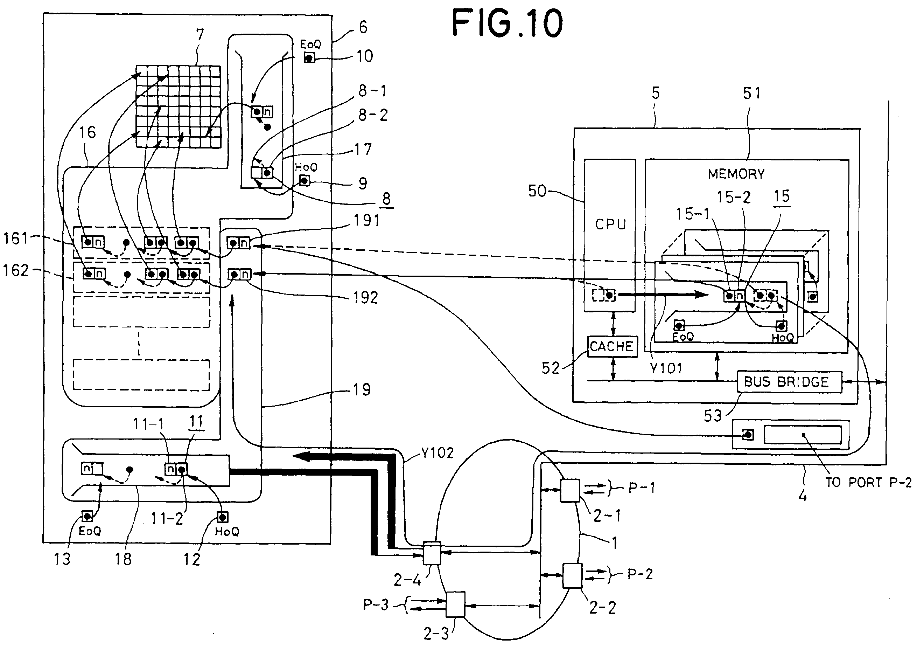

Next, referring to Fig. 10, the packet queue pointer structure at the leading end from the certain logic packet queue 14 present in the central control portion 5 is taken out. Then, via the control bus 4, for ADM 2-0, the packet in the common packet storing memory portion 7 of the packet storing memory portion 6 and the port to output the same are designated. This is illustrated by the arrow Y102 in the drawing.

As a result, the leading pointer of the logic packet queue 14 newly designates the packet queue pointer structure 15 added to the logic packet queue 14 (arrow Y101).

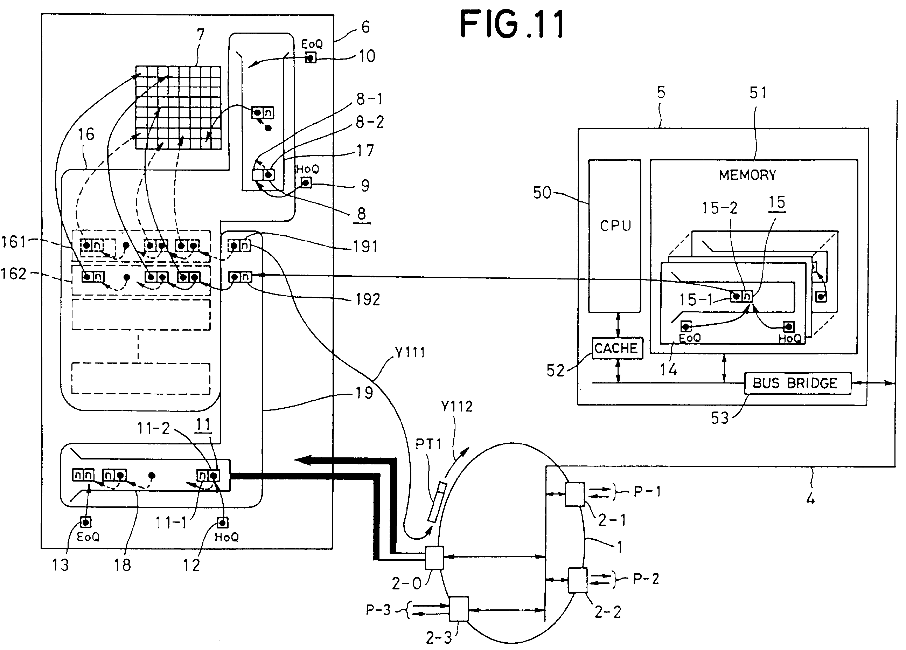

Referring to Fig. 11, according to designation set forth above, ADM 2-0 takes out the designated packet from the common packet storing memory portion 6 (arrow Y111). Then, ADM 2-0 outputs to the ring bus 1 with adding a routing tag designating the output port to the leading end of the packet PT1 (arrow Y112). At this time, the cell pointer structure already used and the packet pointer structure are returned to the trailing ends of respective vacant queues 17 and 18.

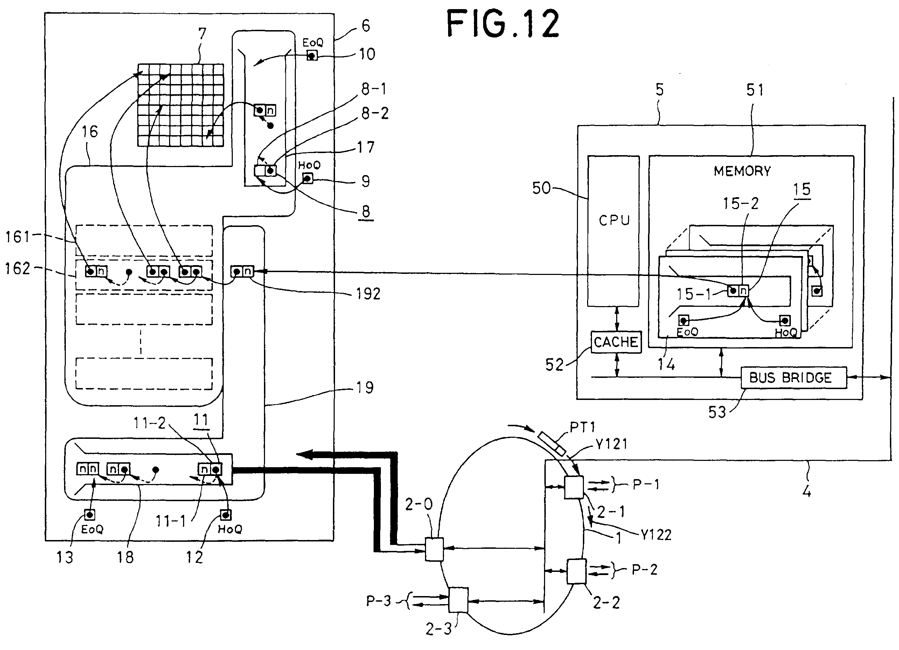

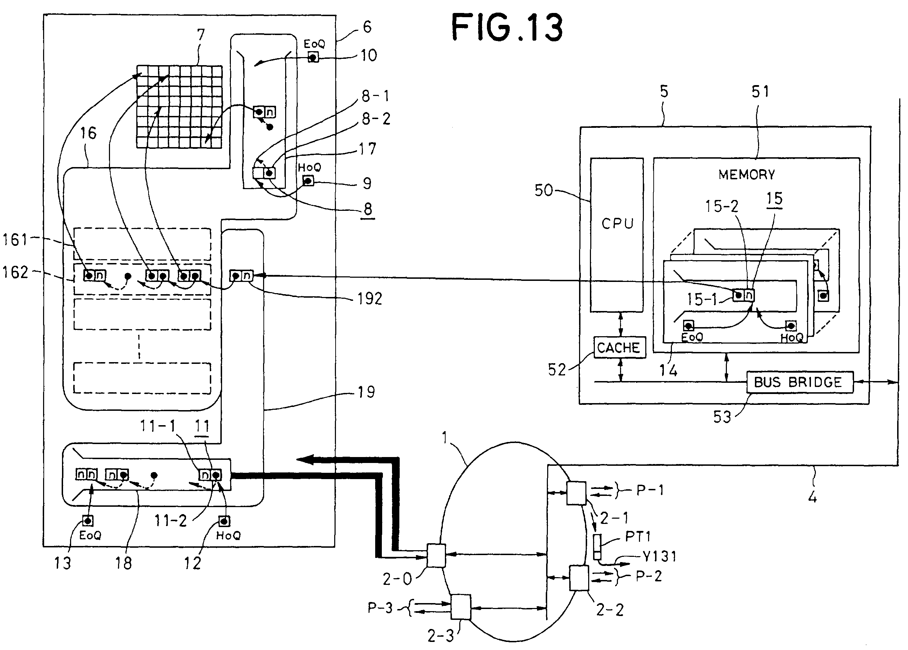

Referring to Fig. 12, the packet PT1 designating the second port as the output port passes ADM 2-1 (arrows Y121 and Y122). Subsequently, referring to Fig. 13, the packet PT1 is dropped at ADM 2-2 (arrow Y131) to remove routing tag. Then, the packet is output to the packet second port P-2.

In short, in the shown system, largely three operations are performed. Namely, three operations, i.e. certainly obtaining the storage region for storing the packet input to the port, storing of the packet to the obtained region, outputting to the port of the stored packet, are performed. Then, any one of these three operations is performed by ADM which obtains token.

As discussed with reference to Figs. 2 to 13, the shown system is provided with a ring form bus dedicated for packet data separately from the bus for control. By this, sufficient band of data can be taken without causing mutual adverse effect between the control system and the data system.

In the shown system, a pipeline type bus is used. Namely, the bus in the shown embodiment is a one-way ring form for outputting with re-timing by latching an input. Therefore, the following effect superior to general ternary logic bus or cross-point type switch can be achieved.

Namely, ternary logic bus is difficult in speeding up of operation rate. In contrast to this, the pipeline type bus is characterized in easiness of speeding up of operation rate. On the other hand, a circuit size is increased in proportion to square of number of ports in case of the cross-point switch, whereas the circuit size is increased in substantially linear to number of ports in case of the pipeline type bus. Furthermore, while both of the ternary logic bus and the cross-point switch are complicate in control, the pipeline type bus is simple in control. Also, while the cross-point switch is required high precision design, the pipeline type bus requires relatively low precision in designing.

Particularly, in the shown embodiment of the system, memory management is largely performed by hardware while a common memory system is employed for adapting to speeding up of the process. Namely, in the shown embodiment, obtaining of the packet storage region in the packet storing memory portion 6 is performed by operation of ADM 2-0. On the other hand, writing of the packet for the obtained packet storage region is performed by operation of ADM 2-3 and ADM 2-0. Furthermore, reading of the written packet is performed by operation of central control portion 5 in addition to ADM 2-0.

Namely, operation of writing of the packet is performed for the memory, the operation is assigned for the hardware suited for such operation. On the other hand, in order to read out the packet from the memory to output to a proper port, parsing of the content of the packet becomes necessary. Therefore, such operation is assigned for the software or firmware suited for such operation. As set forth above, respective operations or processes are assigned for the hardware, software or firmware suited therefor to enable optimization of system design, and to realize high speed operation as a whole system.

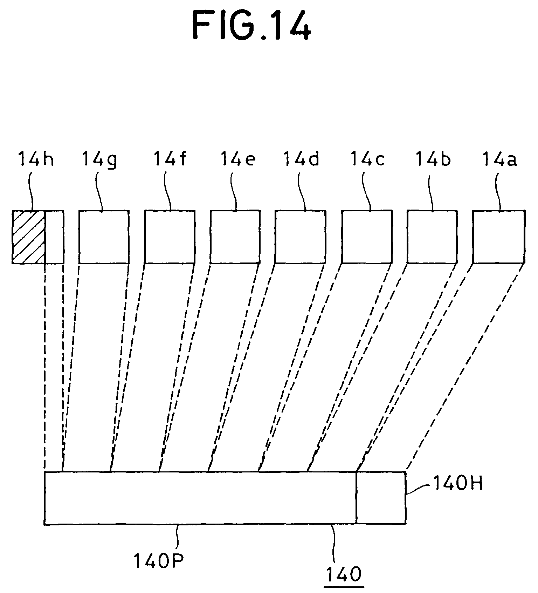

On the other hand, in the shown embodiment, as shown in Fig. 14, the cell of the fixed size (e.g. sixty-four bytes) is taken as the minimum storage unit of the common packet storing memory 7. Namely, the packet 140 in the drawing is divided into fixed size cells 14a to 14h and respective cells are stored in the common packet storing memory portion 7. At this time, in the cell 14h, a blank portion (hatched portion) where no effective data is not stored, is present. The packet 140 is consisted of a header portion 140H and a payload portion 140P.

Here, when the fixed size is greater than sixty-four bytes, for example in case of one hundred twenty-eight bytes, it is highly possible that the foregoing blank portion where no effective data is stored, becomes large. However, by setting the fixed size at sixty-four bytes as in the shown embodiment, in processing of ATM taking the fixed length packet as basic unit, the foregoing blank portion becomes small to make efficiency high. Namely, since the ATM cell is fifty-three bytes, the blank portion becomes eleven bytes as setting the fixed size at sixty-four bytes to achieve high efficiency. If the fixed size is set at fifty-three bytes the same as the ATM cell, the efficiency becomes the highest in processing ATM.

On the other hand, instead of storing the packet of an IP layer at superior position that the ATM in network hierarchical structure by dividing it by the upper limit (sixty-four bytes) of the size of the cell, by storing the packet with dividing per forty-eight byte unit (forty-eight bytes is the size of payload of the ATM cell), it is convenient for installing a function for bidirectional conversion between mutually different packet formats of the ATM cell and the IP packet.

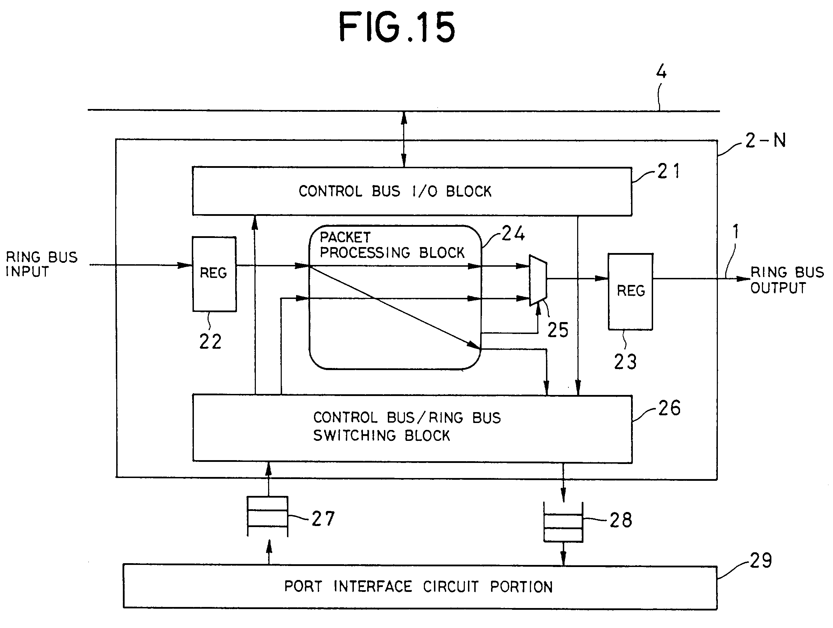

Next, example of the internal structure of each ADM in the ring network will be discussed with reference to Fig. 15. As shown in Fig. 15, ADM 2-N is constructed with a controlling bus I/O block 21 for controlling inputting and outputting with the control bus 4, a register 22 temporarily holding the packet input from the ring bus 1, a register 23 temporarily holding the packet to be output to the ring bus 1, a control bus/ring bus switching block 26 performing switching control of the packet for the control bus 4 and the ring bus 1, a packet processing block 24 taking the output of the block 26 and the held content of the register 22 as inputs and performing switching control of these, and a selector 25 for selectively outputting two outputs of the packet processing block 24 to the register 23.

It should be noted that a port interface circuit portion 29 in the drawing is a circuit for controlling input/output of the packet to and from the port. Between the port interface circuit portion 29 and the control bus/ring bus switching block 26, a reception buffer 27 and a transmission buffer 28 are provided.

With the construction set forth above, packet transmitting operation will be performed as follow. At first, when there is no packet to be transferred to the ring bus 1 from own port, even if a free token is transmitted from the upstream side of the ring bus 1, such free token is transferred to the downstream side. On the other hand, if there is a packet to be transferred to the ring bus 1 from own port, if the free token is transmitted from the upstream side of the ring bus, the free token is dropped and packet is transmitted to the ring bus 1 from the own port.

On the other hand, receiving operation is performed as follow. At first, a packet exclusively address to own ADM arrives from the upstream side of the ring bus 1, such packet is dropped and not transferred to the downstream side. If a packet address to a plurality of recipients and own ADM being included as one of recipients, such packet is dropped and also transferred to the downstream side.

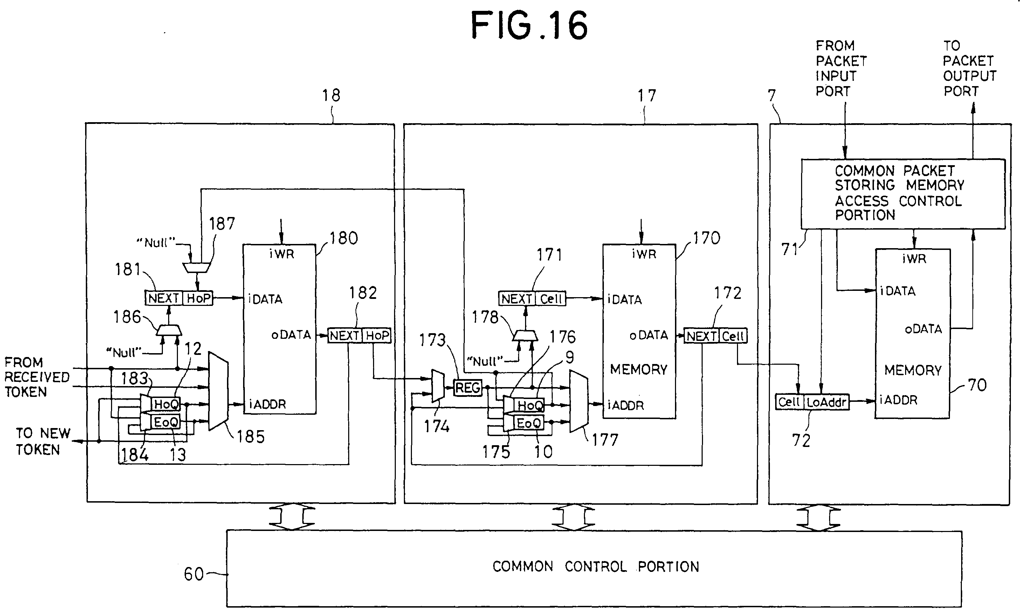

Next, particular construction of the packet storing memory portion 6 will be discussed with reference to Fig. 16. In Fig. 16, the packet storing memory portion 6 is constructed with a packet pointer structure managing portion 18, a cell pointer structure managing portion 17, a common packet storing memory portion 7 and a common control portion 60 controlling respective portions.

The packet pointer structure managing portion 18 is constructed with a memory 180 storing the packet pointer structure and queue of vacant pointer, the queue leading end pointer (Head of Queue: HoQ) 12 indicative of the leading end of the queue of the vacant pointer stored in the memory 180, the queue trailing end pointer (End of Queue: EoQ) 13 indicative of the trailing end of the queue of the vacant pointer, a register 181 providing data to be stored in the memory 180, a register 182 storing data read out from the memory 180, and selectors 183 to 187.

The registers 181 and 182 have NEXT field designating a next cell pointer and a HoP field (head of packet) designating the leading end of the packet.

The pointers 12 and 13 are realized by registers. On an input side of the pointer 12, a selector 183 is provided for selectively inputting the output of the pointer 12 per se and the value of the NEXT field of the register 182. On the other hand, a selector 184 is provided on an input side of the pointer 13 for selectively inputting the output of the pointer 13 per se and a value of the packet pointer fed from CPU 50.

The cell pointer structure managing portion 17 is constructed with a memory 170 storing the cell pointer structure and the queue of the vacant pointer, the vacant cell queue leading end pointer (HoQ) 9 indicative of the leading end of the queue of the vacant pointer, the vacant cell queue trailing end pointer (EoQ) 10 indicative of the trailing end of the queue of the vacant pointer, a register 171 providing data to be stored in the memory 170, a register 172 storing data read out from the memory 170, a temporary register 173 providing data be output from the packet pointer structure managing portion 18 as an address to the memory 170, and selectors 174 to 178.

The registers 171 and 173 have NEXT field indicative of the next cell pointer and a cell pointer (Cell) indicative of the cell.

The pointers 9 and 10 are realized by the registers. On an input side of the pointer 9, a selector 176 is provided for selectively inputting the output of the pointer 9 per se and a value of the NEXT field of the register 172. On the other hand, on an input side of the pointer 10, a selector 175 is provided for selectively inputting the output of the pointer 10 per se and a held value of the temporary register 173.

The common packet storing memory portion 7 comprises a memory 70 for storing the cell, a common packet storing memory access control portion 71 controlling access for the memory 70 and a register 72 providing the address to the memory 70.

Each of the memory 180 in the packet pointer structure managing portion 18, the memory 170 in the cell pointer structure managing portion 17, and the memory 70 in the common packet storing memory portion 7 has a data input terminal iDATA, a data output terminal oDATA, an address input terminal iADDR and an input terminal iWR of a write control signal for controlling writing condition. The common control portion 60 controls writing condition and reading condition of each memory. The common control portion 60 performs control of selecting operation of the selectors is respective portions.

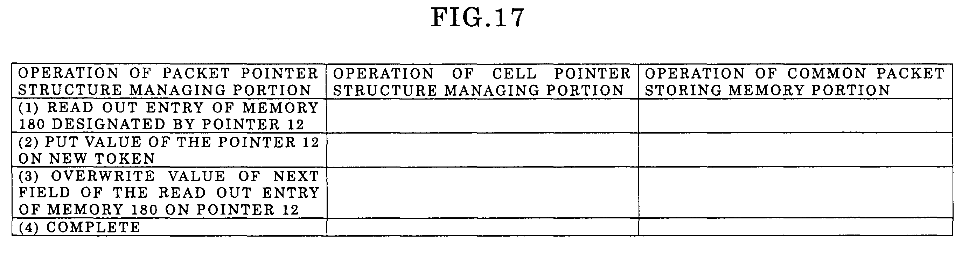

Operation of the packet storing memory portion 6 primarily in control by the common control portion 60 will be discussed with reference to Figs. 17 to 19.

At first, Fig. 17 shows a reception preparatory operation for receiving the packet. Referring to Fig. 17, the reception preparatory operation for receiving the packet is performed as follow. At first, an entry of the memory 180 designated by the queue leading end pointer 12 is read out. Then, the value of the queue leading end pointer 12 is put on a new token. Finally, a value of the NEXT field of the read out entry of the memory 180 is over-written on the queue leading end pointer 12.

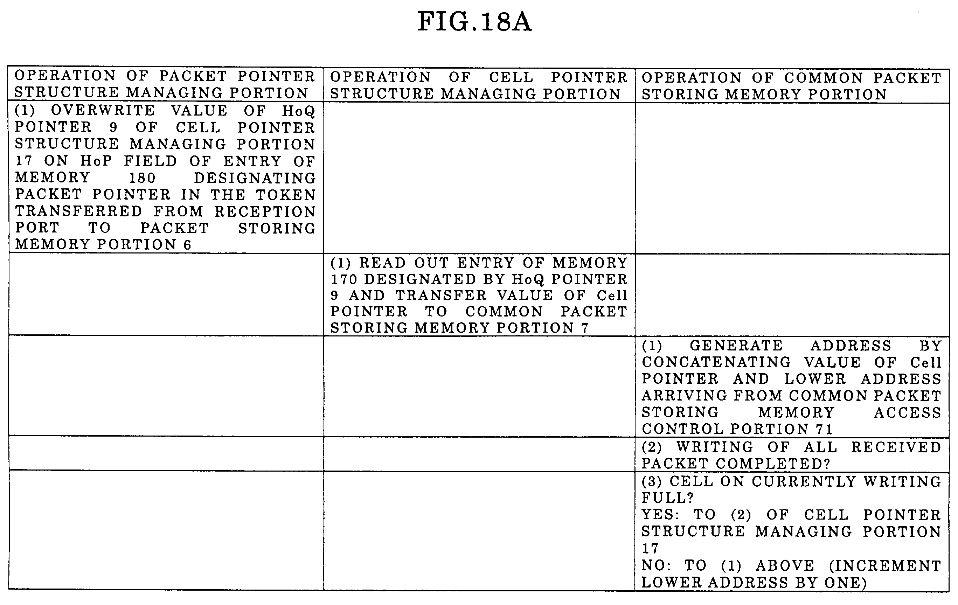

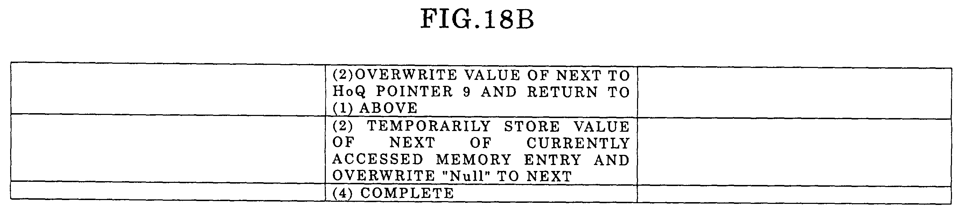

Next, operation for receiving and storing the packet is illustrated in Figs. 18A and 18B. Referring to Figs. 18A and 18B, operation for receiving and storing the packet will be performed as follow.

At first, in the packet pointer structure managing portion 18, a value of the pointer (HoQ) 9 of the cell pointer structure managing portion 17 is over-written in the field of HoP (Head of packet) of the entry of the memory 180 designated by the packet pointer in the token transferred from the reception port to the packet storing memory portion 6.

Next, the entry of the memory 170 designated by the pointer 9 of the cell pointer structure managing portion 17 is read out and held in the register 172. Among the held values, the value of the cell pointer (Cell) is transferred to the common packet storing memory portion 7.

Then, the common packet storing memory portion 7 generates a write address by concatenating the value of the received cell pointer and a value of a lower address (LoAddr) provided from the common packet storing memory access control portion 71 to write one word. If the writing of the all of the received packets is not yet completed, judgment is made whether the cell currently being written is full or not. If not full, after incrementing the value of the lower address by one, the received cell pointer value and the value of the lower address are concatenated to generate the write address to write one word. As set forth above, the write address is generated sequentially to write one word.

If writing of all of the packets is not yet completed and if the cell currently being written is full, the value of the NEXT field is over-written in the pointer 9 in the cell pointer structure managing portion 17. Thereafter, the entry of the memory portion 170 designating the pointer 9 of the cell pointer structure managing portion 17 is read out again to hold the register 172 to transfer the value of the cell pointer among the held values to the common packet storing memory portion 7. Thereafter, similar operation is repeated.

When writing of the received all of the packets is not yet completed in the common packet storing memory portion 7, in the cell pointer structure managing portion 17, the value of the NEXT field of the entry of the memory currently being accessed is temporarily written in the pointer, and "Null" is over-written in the NEXT field. By this, operation for receiving and storing the packet is completed.

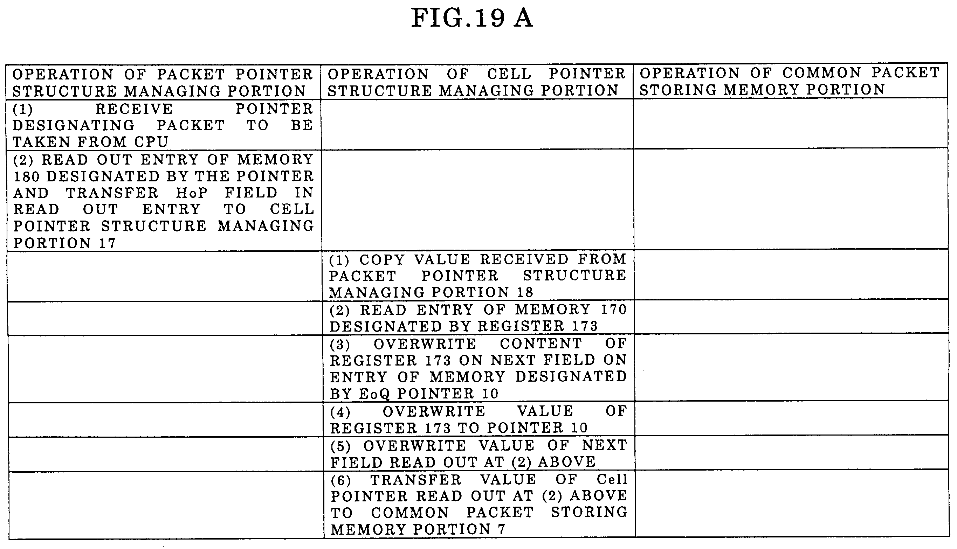

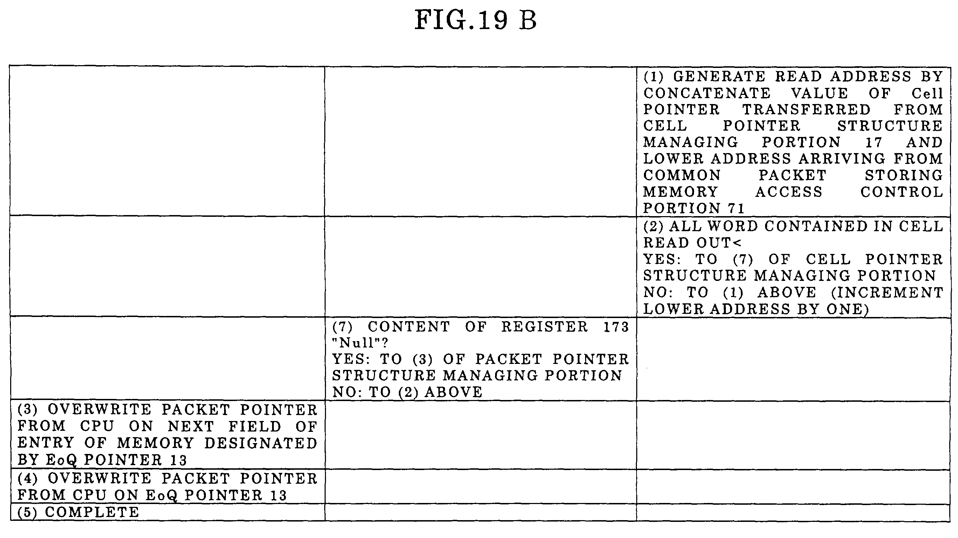

Furthermore, Figs. 19A and 19B shows an operation for taking out the stored packet and erasing from the common packet storing memory portion 7. Referring to Figs. 19A and 19B, operation for taking out the stored packet and erasing the packet from the common packet storing memory portion 7 will be performed as follow.

At first, in the packet pointer structure managing portion 18, the pointer value designating the packet to be taken from CPU 50 is received in the register 181. Next, the entry of the memory 180 designated by the pointer value is read out and held in the register 182. Then, the value of the HoP field in the entry held in the register 182 is transferred to the cell pointer structure managing portion 17.

In the cell pointer structure managing portion 17, the value received from the packet pointer structure managing portion 18 is copied to the temporary register (Reg) 173. The entry of the memory 170 designating the temporary register 173 is read out to be over-written on the NEXT field of the entry of the memory 170 designated by the pointer 10. Furthermore, the value of the temporary register 173 is over-written on the pointer 10. The value of the NEXT field of the read entry of the memory 170 is over-written in the register 173 to transfer the value of the cell pointer of the entry to the common packet storing memory portion 7.

Then, the common packet storing memory portion 7 generates a read address by concatenating the value of the received cell pointer and the value of the lower address provided from the common packet storing memory access control portion 71, to read one word. When reading out of all of the words stored in the cell is not yet completed, after incrementing the value of the lower address by one, the read address is generated by concatenating the value of the received cell pointer and the value of the lower address to read one word. Thus, by sequentially generating the read address, content of the cell is read out per one word.

When reading of all of the words is completed, in the cell pointer structure managing portion 17, judgment is made whether the value held in the temporary register 173 is "Null" or not. If the held value is not "Null", the entry of the memory 170 designated by the temporary register 173 is read out to repeat the foregoing operation.

If the held value is "Null", in the packet pointer structure managing portion 18, the packet pointer fed from CPU 50 is written in the register 181. By this, in the NEXT filed of the entry of the memory designated by the pointer 13, the packet pointer is over-written. Furthermore, the packet pointer transmitted from CPU 50 is over-written to the pointer 13. By this, operation for taking out the stored packet and erasing the same from the common packet storing memory portion 7 is completed.

In order to realize respective operations set forth above, the common control portion 60 performs control for respective selectors and so forth within the packet pointer structure managing portion 18, the cell pointer structure managing portion 17 and the common packet storing memory portion 7.

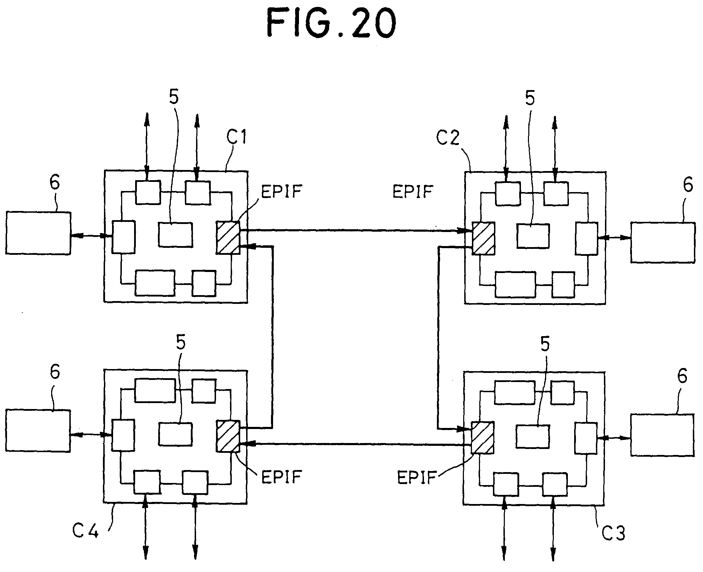

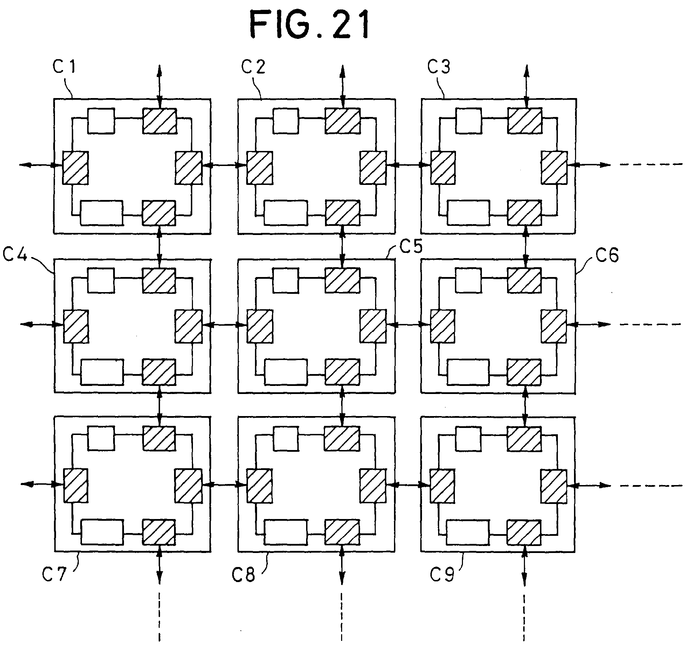

On the other hand, in Figs. 20 and 21, there are illustrated constructions for expanding size and performance of the switch using some of interface ports of the unit switch element as a connection link between unit switch elements with taking the foregoing packet switch system as unit switch element.

Fig. 20 shows a construction in the case where four chips C1 to C4 as the unit switch element are connected through an extension port interface (EPIF). Observing one chip, an input side and an output side of the extension port interface EPIF of the relevant chip are connected to different chips. Namely, concerning the chip C1, the input side of the extension port interface EPIF is connected to the chip C4, and the output side thereof is connected to the chip C2. Similar is true in case of other chips C2 to C4. By connection in this manner, number of ports can be increased physically in the condition where the four chips C1 to C4 are connected. It should be noted that as shown in Fig. 20, each chip illustrated therein is provided with the center control portion 5 and the packet storing memory portion 6.

On the other hand, as shown in Fig. 21, extension port interfaces of adjacent chips (hatched portion in Fig. 21) may be connected with each other. In Fig. 21, there is shown only nine chips C1 to C9, number of ports can be increased to be greater than that in the case of Fig. 20 by establishing similar connection. While not illustrated in Fig. 21, each chip C1 to C9 illustrated therein is provided with the foregoing central control portion 5 and the packet storing memory portion 6.

In Figs. 20 and 21, concerning routing to be made reference to in respective switch element where the packet entering from the input port passes to reach the output port, there are following two adding methods.

Namely, the first method is to determine all of paths in the first switch, to which the packet reaches this system at first and add the routing tags to the packet in sequential order from the routing tag to be provided for the switch at the last stage on the path, in a manner that the routing tag to be provided for the switch of the preceding stage is added to the packet one by one like push to stack strage. Then, whenever the packet is transferred to the switch element in each stage, the routing tag in the stack memory area may be popped. Thus, each switch can obtain the routing tag for own stage.

Next, the second method is to determine only output port in the own switch element and to add only one routing tag to the packet whenever the packet is transferred between respective switch elements. Namely, when the packet is received from sender, the routing tag showing the sender of the packet is added.

By integrating the shown system set forth above on one chip, using the switch element of relatively small size and low performance, the switch having arbitrarily large or small size and arbitrarily high and low performance can be provided. With employing such integrated circuit, a compact router can be formed to easily realize SOHO (Small Office Home Office) by proving in home.

Next, another embodiment of the shown system will be discussed.

In the foregoing embodiment discussed with reference to Figs. 1 to 13, a system employing the token in managing a transmission right upon transmission of the packet received by ADM corresponding to each port is employed. As the management method of the transmission right (access right) in addition to this method, a method providing control by a logic dedicated for arbitration, a method controlling the function by installed as a part of the software operating in the central control portion. As means for transmitting these control to respective ADMs, a method employing a bus dedicated for transmission of arbitration control, a method commonly employing the control bus 4 presenting even in Figs. 1 to 13 for other purpose, and so forth are present.

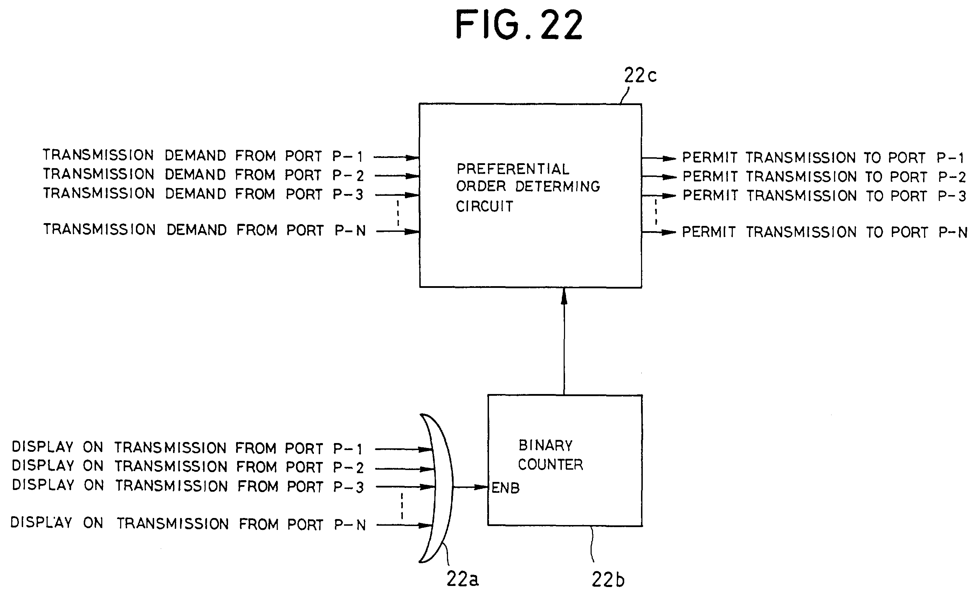

Particular hardware construction for realizing the arbitration will be discussed with reference to Fig. 22. As shown in Fig. 22, the hardware construction includes an OR gate 22a inputting a signal indicative of on-transmission input from the interface of respective ports P-1 to P-N, a binary counter 22b which becomes a count-up enabling condition by an output of the OR gate 22a and a preferential order determining circuit 22c taking a transmission demand input from the interfaces of respective ports P-1 to P-N as an input and outputting a transmission permission to the interface of respective ports P1 to P-N depending upon an output count value of the binary counter 22b.

In the construction set forth above, the preferential order determining circuit 22c determines a preferential order from the most preferred port, the second and subsequent order up to the least preferred port with reference to the value of the count oftained from the binary counter. By this, when the transmission demand signals are simultaneously output from the interface of a plurality of ports, the port to be given transmission permission among a plurality of ports transmitting the transmission demand signals is determined.

On the other hand, since an OR signal of on-transmission indicative signals from respective ports is provided as count-up enabling signal of the binary counter 22b, the value of the binary counter, namely the definition of the most preferred port, is held while any one of the ports is permitted transmission and thus in transmission. Once transmission of one packet is completed, a transmission right of the port which is the second order transmission right at the immediately preceding timing, is switched into that of the most preferred order. Namely, arbitration is performed for circulating the preferential order of the access right for the packet data bus.

It should be noted that the construction of the arbitration circuit shown in Fig. 22 merely shows one example, and various modification becomes possible.

When the foregoing arbitration is employed, it becomes possible to more evenly distribute a band of the ring bus in comparison with the case where foregoing token is used. This feature becomes significant when a ratio of an actually use band relatively a maximum allowable band of the ring bus is high. When the allowable band of the ring bus is sufficiently larger than the required band, sufficiently high equality can be certainly obtained even when the token is used.

It is clear that by preparing a storage medium storing a program for realizing process of the central control portion 5 and respective ADMs set forth above to control respective portions of Fig. 1 using the same, packet data transmitting operation can be performed similarly to the above. As the storage medium, not shown a semiconductor memory, a magnetic disk device and other various storage media can be used.

On the other hand, it is clear that by preparing the storage medium to control a computer using the same, packet data transmitting operation can be performed similarly to the above. As the storage medium, not shown a semiconductor memory, a magnetic disk device and other various storage media can be used.

As set forth above, the present invention can take sufficiently wide band for data without causing adverse effect between the control system and the data system by providing a ring shaped bus dedicated for packet data separately from the bus for control. Since a ring shaped pipeline type bus is used in one-way, bus control can be simplified and operation rate can be easily speeded up in comparison with the general ternary logic bus or cross-point type switch.

Although the present invention has been illustrated and described with respect to exemplary embodiment thereof, it should be understood by those skilled in the art that the foregoing and various other changes, omissions and additions may be made therein and thereto, without departing from the spirit and scope of the present invention. Therefore, the present invention should not be understood as limited to the specific embodiment set out above but to include all possible embodiments which can be embodied within a scope encompassed and equivalents thereof with respect to the feature set out in the appended claims.

## Claims

1. A packet switch system comprising:
a plurality of add drop modules performing transmission and reception of packet data;
a control bus for connecting said add drop modules and control circuit for controlling these add drop modules;
packet data bus provided separately from said control bus, to which said plurality of add drop modules are connected, for transmitting packet data transmitted and received in said add drop modules; and
a memory temporarily storing said packet data to be transmitted and received via said packet data bus,
said plurality of add drop modules performing transmission and reception of packet data via said packet data bus and said memory.

2. A packet switch system as set forth in claim 1, wherein said packet data bus is a one-way ring bus.

3. A packet switch system as set forth in claim 1, wherein said packet data bus is a token ring bus, through which a token to be obtained by any one of said plurality of add drop modules is transferred, the add drop module which obtains said token performs any one of a region obtaining operation for obtaining a region for storing the packet data to be transmitted and received in said memory, storing operation for storing said packet data in the obtained region, and an output operation for outputting the stored packet data.

4. A packet switch system as set forth in claim 1, wherein said plurality of add drop modules are arbitrated for circulated preferential order of access right for said packet data bus, said add drop module obtained an access right performs any one of a region obtaining operation for obtaining a region for storing the packet data to be transmitted and received in said memory, storing operation for storing said packet data in the obtained region, and an output operation for outputting the stored packet data.

5. A packet switch system as set forth in claim 1, wherein said memory has a plurality of fixed length cells and said packet data is dividingly stored in a plurality of cells.

6. A packet switch system as set forth in claim 1, wherein said memory is connected to said packet data bus via one of said plurality of add drop modules.

7. A packet switch system as set forth in claim 5, wherein said fixed length is substantially the same length as a payload size of an ATM cell.

8. A packet switch system as set forth in claim 5, wherein said plurality of cells have a linked list structure and said packet data dividingly stored in said plurality of cells are concatenated by said linked list structure.

9. A packet switch system as set forth in claim 5, wherein said plurality of cells have a linked list structure and vacant cells among said plurality of cells, which store no effective data, are concatenated by said linked list structure.

10. A packet switch system as set forth in claim 5, wherein each leading end portion of said plurality of packet data dividingly stored in said plurality of cells further comprises pointer storing means for storing a plurality of pointers respective designating each cell.

11. A packet switch system as set forth in claim 10, wherein said plurality of pointers stored by said pointer storing means has a linked list structure.

12. A packet switch system as set forth in claim 1, wherein said control bus is a line form bus, to which said plurality of add drop modules and control circuit for controlling said plurality of add drop modules are connected.

13. An integrated circuit integrating on a single chip a packet switch system comprising:
a plurality of add drop modules performing transmission and reception of packet data;
a control bus for connecting said add drop modules and control circuit for controlling these add drop modules;
packet data bus provided separately from said control bus, to which said plurality of add drop modules are connected, for transmitting packet data transmitted and received in said add drop modules; and
a memory temporarily storing said packet data to be transmitted and received via said packet data bus,
said plurality of add drop modules performing transmission and reception of packet data via said packet data bus and said memory.

14. An integrated circuit integrating on a single chip a packet switch system comprising:
a plurality of add drop modules performing transmission and reception of packet data;
a control bus for connecting said add drop modules and control circuit for controlling these add drop modules;
packet data bus provided separately from said control bus, to which said plurality of add drop modules are connected, for transmitting packet data transmitted and received in said add drop modules; and
a memory temporarily storing said packet data to be transmitted and received via said packet data bus,
said plurality of add drop modules performing transmission and reception of packet data via said packet data bus and said memory,
said packet data bus included in said system is connected to the packet data bus included in other packet switch system for transmitting and receiving said packet data with other packet switch system via said packet data bus connected thereto.

15. An integrated circuit as set forth in claim 14, wherein said packet data buses are mutually connected by said add drop module.

16. An integrated circuit as set forth in claim 13, wherein said control bus is a line form bus, to which said plurality of add drop modules and control circuit for controlling said plurality of add drop modules are connected.

17. A packet switch control method in a packet switch system including a plurality of add drop modules performing transmission and reception of packet data, a control bus for connecting said add drop modules and control circuit for controlling these add drop modules, packet data bus provided separately from said control bus, to which said plurality of add drop modules are connected, for transmitting packet data transmitted and received in said add drop modules, and a memory temporarily storing said packet data to be transmitted and received via said packet data bus, said plurality of add drop modules performing transmission and reception of packet data via said packet data bus and said memory, comprising:
region obtaining step of obtaining a region for storing the packet data to be transmitted and received in said memory;
storing step of storing said packet data in said obtained region; and
outputting step of outputting the stored packet data.

18. A packet switch control method as set forth in claim 17, wherein, in said outputting step, a destination of said packet data is extracted from said stored packet data and said packet data is transmitted to the extracted destination.

19. A packet switch control method as set forth in claim 17, wherein said packet data bus is a token ring bus, through which a token to be obtained by any one of said plurality of add drop modules is transferred, said add drop module which obtains said token performs any one of said region obtaining step, said storing step and said output step.

20. A packet switch control method as set forth in claim 17, wherein said plurality of add drop modules are arbitrated for circulated preferential order of access right for said packet data bus, said add drop module obtained an access right performs any one of said region obtaining step, said storing step and said output step.

21. A packet switch control method as set forth in claim 17, wherein said memory has a plurality of fixed length cells and said packet data is dividingly stored in said plurality of cells.

22. A packet switch control method as set forth in claim 17, wherein said memory is connected to said packet data bus via one of said plurality of add drop modules.

23. A packet switch control method as set forth in claim 21, wherein said fixed length is substantially the same length as the payload of an ATM cell.

24. A packet switch control method as set forth in claim 21, wherein said plurality of cells has a linked list structure, said packet data dividingly stored in said plurality of cells are concatenated by said linked list structure.

25. A packet switch control method as set forth in claim 21, wherein said plurality of cells has a linked list structure, and vacant cells storing no effective data are concatenated by said linked list structure.

26. A packet switch control method as set forth in claim 17. wherein said control bus is a line form bus, to which said plurality of add drop modules and control circuit for controlling said add drop modules are connected.

27. A storage medium storing a packet switch control program in a packet switch system including a plurality of add drop modules performing transmission and reception of packet data, a control bus for connecting said add drop modules and control circuit for controlling these add drop modules, packet data bus provided separately from said control bus, to which said plurality of add drop modules are connected, for transmitting packet data transmitted and received in said add drop modules, and a memory temporarily storing said packet data to be transmitted and received via said packet data bus, said plurality of add drop modules performing transmission and reception of packet data via said packet data bus and said memory, said packet switch control program executing:
region obtaining step of obtaining a region for storing the packet data to be transmitted and received in said memory;
storing step of storing said packet data in said obtained region; and
outputting step of outputting the stored packet data.

28. A storage medium as set forth in claim 27, wherein said packet data bus is an one-way ring bus.

29. A storage medium as set forth in claim 27, wherein said packet data bus is a token ring bus, through which a token to be obtained by any one of said plurality of add drop modules is transferred, said add drop module which obtains said token performs any one of said region obtaining step, said storing step and said output step.

30. A storage medium as set forth in claim 27, wherein said plurality of add drop modules are arbitrated for circulated preferential order of access right for said packet data bus, said add drop module obtained an access right performs any one of said region obtaining step, said storing step and said output step.

31. A storage medium as set forth in claim 27, wherein said memory has a plurality of fixed length cells and said packet data is dividingly stored in said plurality of cells.

32. A storage medium as set forth in claim 27, wherein said memory is connected to said packet data bus via one of said plurality of add drop modules.

33. A storage medium as set forth in claim 31, wherein said fixed length is substantially the same length as the payload of an ATM cell.

34. A storage medium as set forth in claim 31, wherein said plurality of cells has a linked list structure, said packet data dividingly stored in said plurality of cells are concatenated by said linked list structure.

35. A storage medium as set forth in claim 31, wherein said plurality of cells has a linked list structure, and vacant cells storing no effective data are concatenated by said linked list structure.

36. A storage medium as set forth in claim 27, wherein said control bus is a line form bus, to which said plurality of add drop modules and control circuit for controlling said add drop modules are connected.
